# EUROPÄISCHE PATENTANMELDUNG

(11) **EP 3 575 124 A1**
(43) Veröffentlichungstag der Anmeldung: **04.12.2019**
(21) Anmeldenummer: 18174724.7
(22) Anmeldetag: 29.05.2018
(51) Int. Cl.: B60L 3/00, B60L 3/04

(54) **ANTRIEBSSYSTEM FÜR EIN SCHIENENFAHRZEUG MIT EINER TRAFOPRIMÄRSEITIGEN KURZSCHLUSSSCHUTZVORRICHTUNG**

(71) Anmelder: Siemens Mobility GmbH, 81739 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)

(57) **Zusammenfassung**

Die Erfindung betrifft ein Antriebssystem (1) für ein Schienenfahrzeug (2), wobei das Antriebssystem (1) einen Stromabnehmer (8), einen Transformator (3), einen netzseitigen Stromrichter (4) mit Halbleitern (41) und eine Kurzschlussschutzvorrichtung (5) aufweist, wobei die Kurzschlussschutzvorrichtung (5) zwischen dem Stromabnehmer (8) und einer Primärseite (32) des Transformators (3) angeordnet ist, wobei die Kurzschlussschutzvorrichtung (5) mindestens ein Halbleiterelement (51) zum Abschalten eines Stromes durch die Primärseite (32) des Transformators (3) aufweist, wobei die Halbleiter (41) des netzseitigen Stromrichters (4) Siliziumcarbid oder Galliumnitrit aufweisen. Ferner betrifft die Erfindung ein Schienenfahrzeug (2) mit einem derartigen Antriebssystem (1), wobei das Schienenfahrzeug (2) für den Betrieb an einer Fahrleitung (7) mit Wechselspannung ausgebildet ist. Die Erfindung betrifft weiter ein Verfahren zum Schutz eines derartigen Antriebssystems (1) oder eines derartigen Schienenfahrzeugs (2), wobei im Fehlerfall mittels der Kurzschlussschutzvorrichtung (5) ein Kurzschlussstrom durch die Halbleiter (41) des netzseitigen Stromrichters (4) abgeschaltet wird.

## Beschreibung

Die Erfindung betrifft ein Antriebssystem für ein Schienenfahrzeug aufweisend einen Stromabnehmer, einen Transformator und einen netzseitigen Stromrichter mit Halbleitern und einem Zwischenkreis. Die Erfindung betrifft weiter ein Schienenfahrzeug mit einem derartigen Antriebssystem. Ferner betrifft die Erfindung ein Verfahren zum Schutz eines derartigen Antriebssystems oder eines derartigen Schienenfahrzeugs.

Bei der Reduktion von Streuinduktivitäten in Transformatoren, insbesondere bei der Anwendung in einem Schienenfahrzeug, muss ein besonderes Augenmerk auf den Schutz sensitiver Komponenten gelegt werden. Die Streuinduktivität im Transformator begrenzt den Stromanstieg im Fehlerfall. Durch die Reduktion der Streuinduktivität, beispielsweise zur Optimierung des gesamten Antriebssystems, nimmt auch die schützende Wirkung des Transformators ab.

Die Verlustleistung von einem Antriebssystem eines Schienenfahrzeugs, das für den Betrieb mit einer AC Fahrdrahtspannung, d.h. eine Fahrleitung mit Wechselspannung, ausgelegt ist, hängt wesentlich vom Wirkungsgrad des Traktionstransformators, auch einfach als Transformator bezeichnet, ab. Der Wirkungsgrad des Transformators wird bei Netzfrequenzen von 50 Hz und bei 16 2/3 Hz durch die Kupferverluste bestimmt. Nach dem Stand der Technik werden zur Begrenzung von Störströmen hohe Kurzschlussspannungen, d.h. hohe Streuinduktivitäten, der Transformatoren vorgesehen.

Der Erfindung liegt die Aufgabe zugrunde, das Antriebssystem eines Schienenfahrzeugs zu verbessern.

Diese Aufgabe wird durch ein Antriebssystem für ein Schienenfahrzeug gelöst, wobei das Antriebssystem einen Stromabnehmer, einen Transformator, einen netzseitigen Stromrichter mit Halbleitern und eine Kurzschlussschutzvorrichtung aufweist, wobei die Kurzschlussschutzvorrichtung zwischen dem Stromabnehmer und einer Primärseite des Transformators angeordnet ist, wobei die Kurzschlussschutzvorrichtung mindestens ein Halbleiterelement zum Abschalten eines Stromes durch die Primärseite des Transformators aufweist, wobei die Halbleiter des netzseitigen Stromrichters Siliziumcarbid oder Galliumnitrit aufweisen. Weiter wird die Aufgabe durch ein Schienenfahrzeug mit einem derartigen Antriebssystem gelöst, wobei das Schienenfahrzeug für den Betrieb an einer Fahrleitung mit Wechselspannung ausgebildet ist. Ferner wird die Aufgabe durch ein Verfahren zum Schutz eines derartigen Antriebssystems oder eines derartigen Schienenfahrzeugs gelöst, wobei im Fehlerfall mittels der Kurzschlussschutzvorrichtung ein Kurzschlussstrom durch die Halbleiter des netzseitigen Stromrichters abgeschaltet wird.

Weitere vorteilhafte Ausgestaltungen der Erfindung sind in den abhängigen Ansprüchen angegeben.

Der Erfindung liegt die Erkenntnis zugrunde, dass sich der Gesamtwirkungsgrad eines Schienenfahrzeugs, dass für den Betrieb an einer Fahrleitung mit Wechselspannung ausgebildet ist, dadurch verbessern lässt, dass die Streuinduktivität des Transformators reduziert wird. Damit sinken die Kupferverluste und es steigt der Wirkungsgrad. Dies führt zu einem geringeren Energieverbrauch des Schienenfahrzeugs. Um das Antriebssystem vor Beschädigung oder Zerstörung auch bei geringer Streuinduktivität zu schützen, ist die Kurzschlussschutzvorrichtung vorhanden. Durch diese werden Kurzschlussstrome durch die Halbleiter des netzseitigen Stromrichters vermieden.

Die Kurzschlussschutzvorrichtung bietet damit den Freiheitsgrad, die Kurzschlussspannung des Transformators teilweise sogar erheblich zu reduzieren. Daraus ergibt sich in der Auslegung des Antriebssystems die Aufgabenstellung, im Fehlerfall (Kurzschluss im Zwischenkreis) hohe Kurzschlussströme in dem netzseitigen Stromrichter, Transformator und anderen Komponenten im Kurzschlusspfad beherrschen zu müssen. Insbesondere die Halbleiter im netzseitigen Stromrichter stellen hierbei eine kritische Begrenzung dar.

Für die Realisierung eines verlustarmen Antriebssystems, das für den Betrieb an einem Fahrleitung mit Wechselspannung vorgesehen ist, ist es deshalb zur Erreichung niedriger Kurzschlussspannungswerte und Streuinduktivitäten vorteilhaft, den Schutz vor Überlastung durch Kurzschlussströmen durch die Kurzschlussschutzvorrichtung sicherzustellen.

Bei der vorliegenden Ausgestaltung weisen die Halbleiter des netzseitigen Stromrichters Siliziumcarbid oder Galliumnitrit auf. Gerade diese Halbleiter eignen sich aufgrund ihrer hohen zulässigen Schaltfrequenz im besonderen Maße für den netzseitigen Stromrichter, da sich mit ihnen Störströme auf einfache Weise vermeiden lassen oder nur in Frequenzbereichen entstehen, die für den Betrieb des Schienenfahrzeugs unkritisch sind. Da diese Bauelemente jedoch Prinzip bedingt nur eine geringe Kurzschlussbelastung zulassen, ist das Antriebssystem mit einer Kurzschlussschutzvorrichtung besonders geeignet, die Vorteile des Störstromverhaltens und des hohen Wirkungsgrades gleichzeitig nutzen zu können.

Die Kurzschlussschutzvorrichtung öffnet im Fehlerfall die Verbindung zwischen Stromabnehmer und Transformator. Ein Kurzschluss, beispielsweise im Zwischenkreis, führt dann nicht mehr zu einem Stromfluss durch den netzseitigen Stromrichter, weil die Energiezufuhr durch die Kurzschlussschutzvorrichtung unterbrochen ist. Aufgrund der empfindlichen Halbleiter auf Basis von Siliziumcarbid oder Galliumnitrit und der geringen Streuinduktivität ist es notwendig, dass der Schutz durch die Kurzschlussschutzvorrichtung möglichst schnell anspricht. Dafür kommen dann Halbleiterelemente zum Einsatz, die deutlich schneller einen Strom unterbrechen können als mechanische Schalter. Durch das schnelle Schalten können auch größere Stromanstiegsgeschwindigkeiten toleriert werden, so dass der Transformator nur noch eine geringe Streuinduktivität benötigt.

Bei einer weiteren vorteilhaften Ausgestaltung der Erfindung weist die Kurzschlussschutzvorrichtung einen Varistor auf, wobei der Varistor parallel zu dem Halbleiterelement angeordnet ist. Mit dem Varistor lassen sich die im Schaltzeitpunkt entstehenden Spannungsspitzen reduzieren, die teilweise eine unzulässig hohe Belastung der Halbleiter des netzseitigen Stromrichters darstellen können.

Bei einer weiteren vorteilhaften Ausgestaltung der Erfindung weist die Kurzschlussschutzvorrichtung einen mechanischen Schalter auf, wobei der mechanische Schalter parallel zu dem Halbleiterelement angeordnet ist. Der mechanische Schalter besitzt im Vergleich zum Hableiterelement nur äußerst geringe Verluste im geschlossenen Schalter. So können durch die parallele im Normalbetrieb die Verluste der Kurzschlussschutzvorrichtung gering gehalten werden. Damit hat das Antriebssystem einen hohen Wirkungsgrad.

Im Folgenden wird die Erfindung anhand der in den Figuren dargestellten Ausführungsbeispiele näher beschrieben und erläutert. Es zeigen:
- FIG 1: ein bekanntes Antriebssystem,
- FIG 2: ein Ausführungsbeispiel eines Antriebssystems mit einer Kurzschlussschutzvorrichtung,
- FIG 3, FIG 4: jeweils eine Kurzschlussschutzvorrichtung,
- FIG 5: ein Schienenfahrzeug.

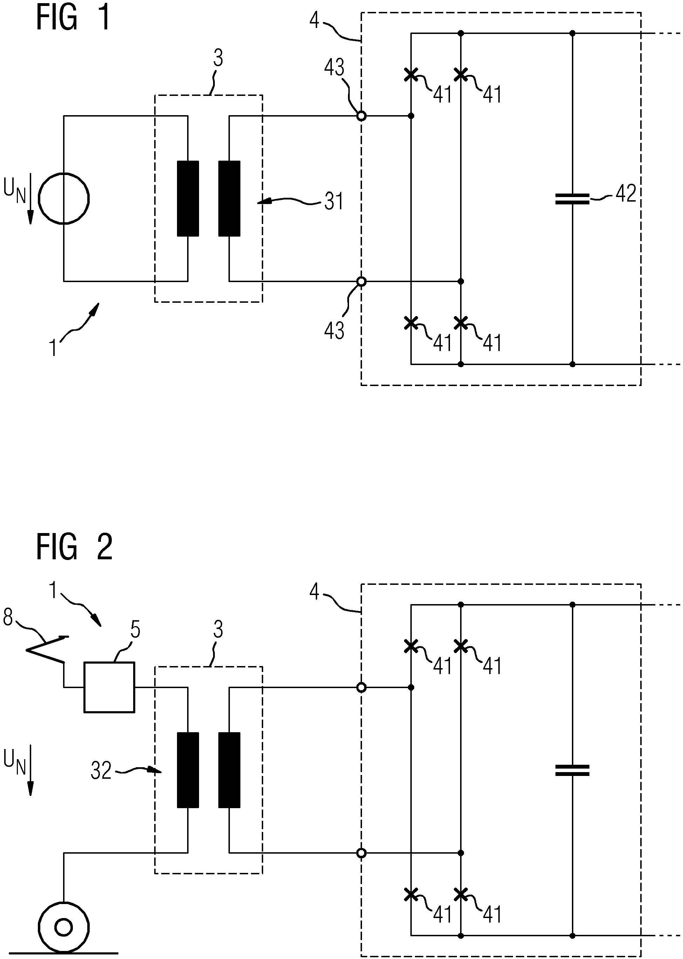

Die FIG 1 zeigt ein bekanntes Antriebssystem 1 mit einem Transformator 3 und einem Netzseitigen Stromrichter 4. Der netzseitige Stromrichter weist Halbleiter 41 auf, mit denen die Spannung am Zwischenkreiskondensator 42 geregelt werden kann. Mit den wechselspannungsseitigen Eingängen 43 ist der netzseitige Stromrichter 4 mit der Sekundärseite 31 des Transformators 3 verbunden. Stromabnehmer und Fahrleitung sind in dieser Figur vereinfacht als Spannungsquelle mit der Netzspannung U_{N} dargestellt. Üblicherweise schließt sich am Zwischenkreis des netzseitigen Stromrichters 4 ein Pulswechselrichter an, mit denen die Motoren des Schienenfahrzeugs angetrieben werden.

Die FIG 2 zeigt ein Ausführungsbeispiel eines Antriebssystems 1 mit einer Kurzschlussschutzvorrichtung 5. Zur Vermeidung von Wiederholungen wird auf die Beschreibung zur FIG 1 und auf die dort eingeführten Bezugszeichen verwiesen. Zwischen Stromabnehmer 8 und Primärseite 32 des Transformators ist nun elektrisch in Reihe eine Kurzschlussschutzvorrichtung 5 angeordnet. Tritt ein Kurzschluss im Antriebssystem 1 auf, beispielsweise im Zwischenkreis, so führt das Ansprechen der Kurzschlussschutzvorrichtung 5 dazu, dass primärseitige Strompfad geöffnet wird und ein Stromfluss zum Kurzschluss hin unterbunden wird. Damit wird auch der Strom durch die Halbleiter 41 des netzseitigen Stromrichters 4 auf null reduziert, d.h. beseitigt.

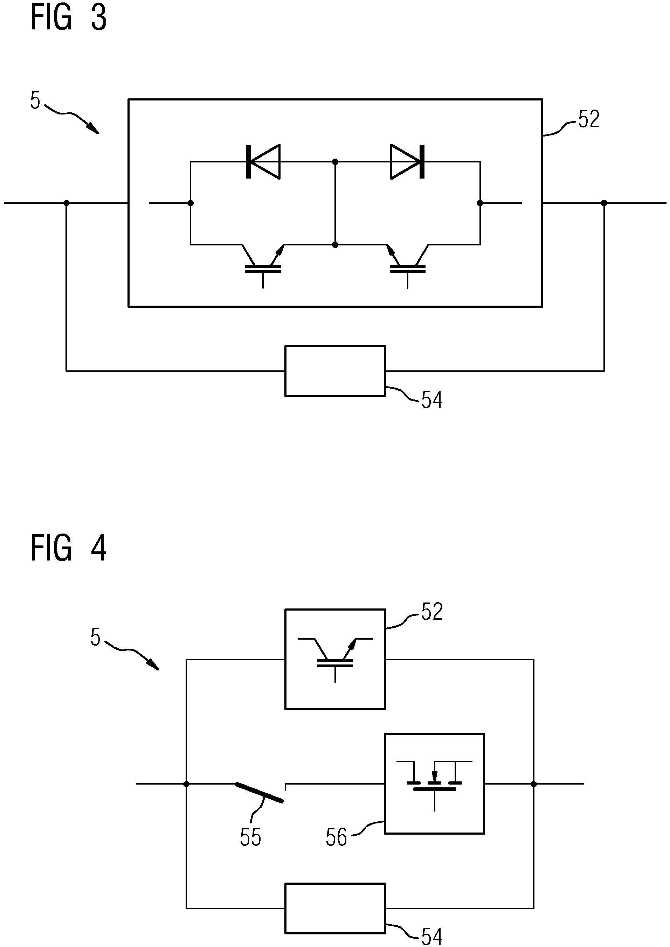

Um trotz hoher Stromanstiegsgeschwindigkeiten aufgrund geringer Streuinduktivitäten des Transformators 3 einen hinreichenden Schutz sicherzustellen, werden als Kurzschlussschutzvorrichtungen 5 schnell öffnende Schalter benötigt. Ausführungsbeispiele dafür zeigen die Figuren 3 und 4.

Bei dem Ausführungsbeispiel der FIG 3 schaltet ein Halbleiterelement 52 den Strom ab. Eine derartige Anordnung kann auch als elektronischer Schalter bezeichnet werden. Dabei sind zwei abschaltbare Halbleiterschalter in Reihe angeordnet. Jeder dieser beiden Schalter kann den Strom in jeweils eine Richtung abschalten. Durch das schnelle Abschalten können hohe Spannungsspitzen entstehen. Um diese zu vermeiden ist parallel zum Halbleiterelement 52 ein Varistor 54 angeordnet, der die Entstehung dieser Spannungsspitzen vermeidet. Der Vorteil dieser Kurzschlussschutzvorrichtung liegt in einer besonders schnellen Abschaltzeit. Bei geringen Belastungsgrenzwerten der sensitiven Komponenten und schnellen Stromanstiegsgeschwindigkeiten stellt diese Ausführung eine besonders vorteilhafte Lösung dar.

Die FIG 4 zeigt ein weiteres Ausführungsbeispiel einer Kurzschlussschutzvorrichtung 5. Zur Vermeidung von Wiederholungen wird auf die Beschreibung zur FIG 3 und die dort eingeführten Bezugszeichen verwiesen. Der hier dargestellte elektronische Schalter ist gegenüber dem vorhergehenden Ausführungsbeispiel um einen weiteren Parallelpfad erweitert, in dem ein mechanischer Schalter 55 angeordnet ist. Dieser Schalter hat im geschlossenen Zustand nur sehr geringe Durchlassverluste. Während des Betriebs ist dieser geschlossen und leitet den Strom. Im Fehlerfall kann der mechanische Schalter 55 geöffnet werden und der Strom wird dann vom Halbleiterelement 52 übernommen. Dieser wiederum kann den gesamten zu schaltenden Strom schnell abschalten. Zur Optimierung des Schaltverhaltens kann zusätzlich noch ein weiterer Halbleiterschalter 56 in Reihe zum mechanischen Schalter vorgesehen werden.

Der Einsatz eines mechanischen Schalters hat den Vorteil, betrieblich geringste Verluste zu produzieren. Die Abschaltzeiten werden höher als bei einer rein elektronischen Lösung wie beispielsweise im vorgehenden Ausführungsbeispiel gezeigt.

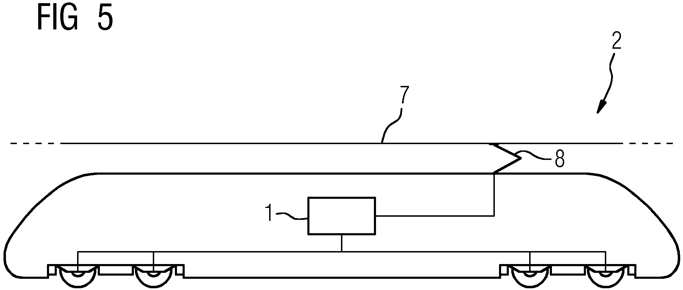

Die FIG 5 zeigt ein Schienenfahrzeug 2. Die elektrische Energie bezieht das Schienenfahrzeug aus einer Fahrleitung 7, die gegenüber dem Erdpotential eine Wechselspannung aufweist. Über einen Stromabnehmer 8 wird der Fahrleitung 7 elektrische Energie entnommen und dem Antriebssystem 1 zugeführt. Dieses verteilt die Energie an Motoren, die an den Rädern des Schienenfahrzeugs 2 angeordnet sind und das Schienenfahrzeug 2 antreiben.

Zusammenfassend betrifft die Erfindung ein Antriebssystem für ein Schienenfahrzeug, wobei das Antriebssystem einen Stromabnehmer, einen Transformator, einen netzseitigen Stromrichter mit Halbleitern und eine Kurzschlussschutzvorrichtung aufweist, wobei die Kurzschlussschutzvorrichtung zwischen dem Stromabnehmer und einer Primärseite des Transformators angeordnet ist, wobei die Kurzschlussschutzvorrichtung mindestens ein Halbleiterelement zum Abschalten eines Stromes durch die Primärseite des Transformators aufweist, wobei die Halbleiter des netzseitigen Stromrichters Siliziumcarbid oder Galliumnitrit aufweisen. Ferner betrifft die Erfindung ein Schienenfahrzeug mit einem derartigen Antriebssystem, wobei das Schienenfahrzeug für den Betrieb an einer Fahrleitung mit Wechselspannung ausgebildet ist. Die Erfindung betrifft weiter ein Verfahren zum Schutz eines derartigen Antriebssystems oder eines derartigen Schienenfahrzeugs, wobei im Fehlerfall mittels der Kurzschlussschutzvorrichtung ein Kurzschlussstrom durch die Halbleiter des netzseitigen Stromrichters abgeschaltet wird.

## Patentansprüche

1. Antriebssystem (1) für ein Schienenfahrzeug (2), wobei das Antriebssystem (1)
- einen Stromabnehmer (8),
- einen Transformator (3),
- einen netzseitigen Stromrichter (4) mit Halbleitern (41) und
- eine Kurzschlussschutzvorrichtung (5)
aufweist, wobei die Kurzschlussschutzvorrichtung (5) zwischen dem Stromabnehmer (8) und einer Primärseite (32) des Transformators (3) angeordnet ist, wobei die Kurzschlussschutzvorrichtung (5) mindestens ein Halbleiterelement (51) zum Abschalten eines Stromes durch die Primärseite (32) des Transformators (3) aufweist, wobei die Halbleiter (41) des netzseitigen Stromrichters (4) Siliziumcarbid oder Galliumnitrit aufweisen.

2. Antriebssystem (1) nach Anspruch 1, wobei die Kurzschlussschutzvorrichtung (5) einen Varistor (54) aufweist, wobei der Varistor (54) parallel zu dem Halbleiterelement (51) angeordnet ist.

3. Antriebssystem (1) nach einem der Ansprüche 1 oder 2, wobei die Kurzschlussschutzvorrichtung (5) einen mechanischen Schalter (55) aufweist, wobei der mechanische Schalter (55) parallel zu dem Halbleiterelement (51) angeordnet ist.

4. Schienenfahrzeug (2) mit einem Antriebssystem (1) nach einem der Ansprüche 1 bis 3, wobei das Schienenfahrzeug (2) für den Betrieb an einer Fahrleitung (7) mit Wechselspannung ausgebildet ist.

5. Verfahren zum Schutz eines Antriebssystems (1) nach einem der Ansprüche 1 bis 3 oder eines Schienenfahrzeugs (2) nach Anspruch 4, wobei im Fehlerfall mittels der Kurzschlussschutzvorrichtung (5) ein Kurzschlussstrom durch die Halbleiter (41) des netzseitigen Stromrichters (4) abgeschaltet wird.
